# EUROPEAN PATENT APPLICATION

(11) **EP 2 677 013 A1**
(43) Date of publication of application: **25.12.2013**
(21) Application number: 12747341.1
(22) Date of filing: 10.01.2012
(51) Int. Cl.: C09J 7/02, C09J 119/00, C09J 123/00, C09J 125/04, C09J 133/06, C09J 153/00

(54) **ADHESIVE SHEET**

(30) Priority: 18.02.2011 JP 2011033304; 18.02.2011 JP 2011033305; 18.02.2011 JP 2011033306
(71) Applicant: Nitto Denko Corporation, Ibaraki-shi, Osaka 567-8680 (JP)
(72) Inventor: TAKEDA, Kouhei, Ibaraki-shi, Osaka 567-8680 (JP); IKISHIMA, Shinsuke, Ibaraki-shi, Osaka 567-8680 (JP); KATO, Yuki, Ibaraki-shi, Osaka 567-8680 (JP)
(74) Representative: Grünecker, Kinkeldey, Stockmair & Schwanhäusser
(86) International application number: PCT/JP2012/050245
(87) International publication number: WO 2012/111358

(57) **Abstract**

Provided is a pressure-sensitive adhesive sheet formed of at least three layers, including a backing layer (A), a first pressure-sensitive adhesive layer (B1), and a second pressure-sensitive adhesive layer (B2) in the stated order, in which the pressure-sensitive adhesive sheet has high interlayer adhesiveness. Specifically provided is a first pressure-sensitive adhesive sheet, which is a pressure-sensitive adhesive sheet formed of at least three layers, including a backing layer (A), a first pressure-sensitive adhesive layer (B1), and a second pressure-sensitive adhesive layer (B2) in the stated order, in which: the backing layer (A) contains a thermoplastic resin; the first pressure-sensitive adhesive layer (B1) contains at least one kind selected from an α-olefin-based thermoplastic elastomer and a styrene-based thermoplastic elastomer; and the second pressure-sensitive adhesive layer (B2) contains an acrylic block copolymer containing an acrylic acid ester block structure and a methacrylic acid ester block structure.

## Description

### Technical Field

The present invention relates to a pressure-sensitive adhesive sheet, and more specifically, to a pressure-sensitive adhesive sheet formed of at least three layers, including a backing layer (A), a first pressure-sensitive adhesive layer (B1), and a second pressure-sensitive adhesive layer (B2) in the stated order, in which the pressure-sensitive adhesive sheet has high interlayer adhesiveness.

### Background Art

An acrylic polymer is excellent in light fastness and transparency, and functions suitable for various applications can be imparted to the acrylic polymer depending on a combination of raw materials for synthesizing the polymer. Accordingly, the acrylic polymer has been preferably used in a pressure-sensitive adhesive layer for a pressure-sensitive adhesive sheet.

For example, the following thermoplastic acrylic pressure-sensitive adhesive has been proposed (see, for example, Patent Literatures 1 to 3). The pressure-sensitive adhesive is obtained by precisely polymerizing a block copolymer of an acrylic acid ester as a soft segment and a methacrylic acid ester as a hard segment by a living polymerization method, and has excellent characteristics in terms of various aspects such as heat resistance, weatherability, flexibility, transparency, and pressure-sensitive adhesive property.

A pressure-sensitive adhesive sheet can be produced by using the thermoplastic acrylic pressure-sensitive adhesive through co-extrusion molding because the pressure-sensitive adhesive has thermoplasticity. According to the co-extrusion molding, the sheet can be produced in one step because a backing layer and a pressure-sensitive adhesive layer are simultaneously extruded to be laminated. Accordingly, a reduction in production cost and simplification of a production process can be achieved. In addition, the co-extrusion molding has the following advantage (see, for example, Patent Literatures 4 to 6). A solvent such as an organic solvent is not used, and hence a drying step becomes unnecessary and an environmental load is low.

On the other hand, when the acrylic pressure-sensitive adhesive sheet is produced by the co-extrusionmolding, the following problem arises. A pre-treatment for a surface of a material (backing sheet) constituting the backing layer cannot be performed because the production is completed in one step. In general, when a backing layer constituted of a nonpolar material such as a polyethylene or a polypropylene is provided with an acrylic pressure-sensitive adhesive layer having high polarity, their electrostatic interaction is weak, and hence adhesiveness between the backing layer and the pressure-sensitive adhesive layer is low. Accordingly, the adhesiveness between the backing layer and the pressure-sensitive adhesive layer is improved by subjecting a surface of the backing sheet to a pre-treatment such as a corona treatment, a plasma treatment, a UV light irradiation treatment, or an electron beam irradiation treatment in advance. However, the co-extrusion molding precludes such pre-treatment.

In the co-extrusion molding, an approach involving providing an intermediate layer serving as an adhesion layer between the backing layer and the pressure-sensitive adhesive layer has been proposed for resolving such problem as described above (see, for example, Patent Literatures 5 and 6). When an ethylene-vinyl acetate copolymer is used (Patent Literature 5) in the intermediate layer, the electrostatic interaction with the acrylic pressure-sensitive adhesive strengthens and hence the interlayer adhesiveness improves to some extent. However, the interlayer adhesiveness is not expected to improve up to a level needed for a practical pressure-sensitive adhesive sheet. In addition, in such a method that a modified olefin containing an epoxy group or a cyclic anhydride is used as a constituent resin for the intermediate layer and the interlayer adhesiveness is obtained by ring-opening of such functional group (Patent Literature 6), the constituent resin for the intermediate layer has so high reactivity that a risk of occurrence of changes in chemical physical properties of the acrylic pressure-sensitive adhesive constituting the pressure-sensitive adhesive layer is higher (particularly when the pressure-sensitive adhesive layer is thinner).

In addition, upon provision of a pressure-sensitive adhesive sheet obtained by providing a backing layer with a plurality of pressure-sensitive adhesive layers, the following problem is liable to occur. When the sheet is peeled after having been attached to an adherend, an adhesive residue occurs on the adherend. Such adhesive residue is liable to occur when interlayer adhesiveness between the backing layer and a pressure-sensitive adhesive layer laminated so as to be adjacent thereto is low, or when interlayer adhesiveness between the plurality of pressure-sensitive adhesive layers adjacent to each other is low.

### Citation List

### Patent Literature

[PTL 1] JP 2001-234146 A
[PTL 2] JP 2002-97238 A
[PTL 3] JP 11-323072 A
[PTL 4] JP 2009-125985 A
[PTL 5] JP 2009-241348 A
[PTL 6] JP 2009-249541 A

### Summary of Invention

### Technical Problem

The present invention has been made to solve the conventional problems, and an object of the present invention is to provide a pressure-sensitive adhesive sheet formed of at least three layers, including a backing layer (A), a first pressure-sensitive adhesive layer (B1), and a second pressure-sensitive adhesive layer (B2) in the stated order, in which the pressure-sensitive adhesive sheet has high interlayer adhesiveness.

### Solution to Problem

Afirstpressure-sensitive adhesive sheet of the present invention is a pressure-sensitive adhesive sheet formed of at least three layers, including a backing layer (A), a first pressure-sensitive adhesive layer (B1), and a second pressure-sensitive adhesive layer (B2) in the stated order, in which: the backing layer (A) contains a thermoplastic resin; the first pressure-sensitive adhesive layer (B1) contains at least one kind selected from an α-olefin-based thermoplastic elastomer and a styrene-based thermoplastic elastomer; and the second pressure-sensitive adhesive layer (B2) contains an acrylic block copolymer containing an acrylic acid ester block structure and a methacrylic acid ester block structure.

In a preferred embodiment, the backing layer (A) contains a polyolefin-based resin.

In a preferred embodiment, the acrylic block copolymer has a weight-average molecular weight of 30,000 to 300,000.

In a preferred embodiment, the first pressure-sensitive adhesive sheet of the present invention is a laminate including a laminated structure "backing layer (A) /first pressure-sensitive adhesive layer (B1) / second pressure-sensitive adhesive layer (B2)," and is obtained by integrating formation materials for the laminate including a formation material (a) for the backing layer (A), a formation material (b1) for the first pressure-sensitive adhesive layer (B1), and a formation material (b2) for the second pressure-sensitive adhesive layer (B2) through co-extrusion molding.

A second pressure-sensitive adhesive sheet of the present invention is a pressure-sensitive adhesive sheet formed of at least three layers, including a backing layer (A), a first pressure-sensitive adhesive layer (B1), and a second pressure-sensitive adhesive layer (B2) in the stated order, in which: a peel strength upon peeling of the first pressure-sensitive adhesive layer (B1) from the backing layer (A) under the conditions of a measurement temperature of 23°C, a tension speed of 0.3 m/min, and a peel angle of 180° is 2.0 N/20 mm or more; and a peel strength upon peeling of the second pressure-sensitive adhesive layer (B2) from the first pressure-sensitive adhesive layer (B1) under the conditions of a measurement temperature of 23°C, a tension speed of 0.3 m/min, and a peel angle of 180° is 2.0 N/20 mm or more.

In a preferred embodiment, the backing layer (A) contains a thermoplastic resin.

In a preferred embodiment, the backing layer (A) contains a polyolefin-based resin.

In a preferred embodiment, the first pressure-sensitive adhesive layer (B1) contains at least one kind selected from an α-olefin-based thermoplastic elastomer and a styrene-based thermoplastic elastomer.

In a preferred embodiment, the second pressure-sensitive adhesive layer (B2) contains an acrylic block copolymer containing an acrylic acid ester block structure and a methacrylic acid ester block structure.

In a preferred embodiment, the acrylic block copolymer has a weight-average molecular weight of 30,000 to 300,000.

In a preferred embodiment, the second pressure-sensitive adhesive sheet of the present invention is a laminate including a laminated structure "backing layer (A) /first pressure-sensitive adhesive layer (B1)/second pressure-sensitive adhesive layer (B2)," and is obtained by integrating formation materials for the laminate including a formation material (a) for the backing layer (A), a formation material (b1) for the first pressure-sensitive adhesive layer (B1), and a formation material (b2) for the second pressure-sensitive adhesive layer (B2) through co-extrusion molding.

Athird pressure-sensitive adhesive sheet of the present invention is a pressure-sensitive adhesive sheet formed of at least three layers, including a backing layer (A), a first pressure-sensitive adhesive layer (B1), and a second pressure-sensitive adhesive layer (B2) in the stated order, in which at least one of the first pressure-sensitive adhesive layer (B1) and the second pressure-sensitive adhesive layer (B2) contains a tackifier.

In a preferred embodiment, when the first pressure-sensitive adhesive layer (B1) contains the tackifier, the content of the tackifier in the first pressure-sensitive adhesive layer (B1) is 5 wt% or more with respect to a resin component of the first pressure-sensitive adhesive layer (B1).

In a preferred embodiment, when the second pressure-sensitive adhesive layer (B2) contains the tackifier, the content of the tackifier in the second pressure-sensitive adhesive layer (B2) is 5 wt% or more with respect to a resin component of the second pressure-sensitive adhesive layer (B2).

In a preferred embodiment, the backing layer (A) contains a thermoplastic resin.

In a preferred embodiment, thebackinglayer (A) contains a polyolefin-based resin.

In a preferred embodiment, the first pressure-sensitive adhesive layer (B1) contains at least one kind selected from an α-olefin-based thermoplastic elastomer and a styrene-based thermoplastic elastomer.

In a preferred embodiment, the second pressure-sensitive adhesive layer (B2) contains an acrylic block copolymer containing an acrylic acid ester block structure and a methacrylic acid ester block structure.

In a preferred embodiment, the acrylic block copolymer has a weight-average molecular weight of 30,000 to 300,000.

In a preferred embodiment,thethird pressure-sensitive adhesive sheet of the present invention is a laminate including a laminated structure "backing layer (A) /first pressure-sensitive adhesive layer (B1)/second pressure-sensitive adhesive layer(B2)," and is obtained by integrating formation materials for the laminate including a formation material (a) for the backing layer (A), a formation material (b1) for the first pressure-sensitive adhesive layer (B1), and a formation material (b2) for the second pressure-sensitive adhesive layer (B2) through co-extrusion molding.

### Advantageous Effects of Invention

According to the present invention, the pressure-sensitive adhesive sheet formed of at least three layers, including a backing layer (A), a first pressure-sensitive adhesive layer (B1), and a second pressure-sensitive adhesive layer (B2) in the stated order, in which the pressure-sensitive adhesive sheet has high interlayer adhesiveness, can be provided.

According to the present invention, the pressure-sensitive adhesive sheet having high interlayer adhesiveness can be produced by employing the co-extrusion molding, and hence the sheet can be produced in one step, and a reduction in production cost and the simplification of a production process can be achieved.

According to the present invention, the pressure-sensitive adhesive sheet having high interlayer adhesiveness can be produced by employing the co-extrusion molding, and hence there is no need to use a solvent such as an organic solvent, a drying step becomes unnecessary, and an environmental load can be reduced.

### Brief Description of Drawing

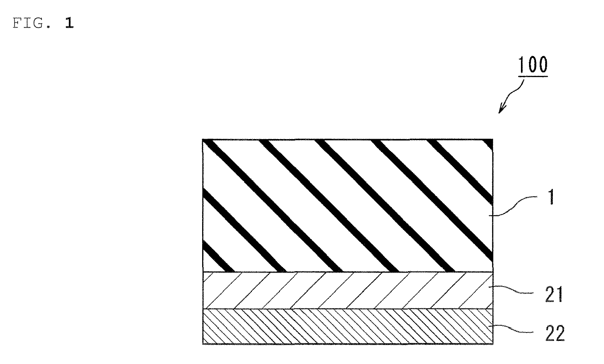

FIG. 1 is a schematic sectional view of a pressure-sensitive adhesive sheet according to a preferred embodiment of the present invention.

### Description of Embodiments

### ««A. Pressure-sensitive adhesive sheet»»

A pressure-sensitive adhesive sheet of the present invention is a pressure-sensitive adhesive sheet formed of at least three layers, including a backing layer (A), a first pressure-sensitive adhesive layer (B1), and a second pressure-sensitive adhesive layer (B2) in the stated order. That is, the pressure-sensitive adhesive sheet of the present invention is a laminate including a laminated structure "backing layer (A)/first pressure-sensitive adhesive layer (B1)/second pressure-sensitive adhesive layer (B2)." Here, the expression "backing layer (A) /first pressure-sensitive adhesive layer (B1)/second pressure-sensitive adhesive layer (B2)" represents a structure in which the backing layer (A), the first pressure-sensitive adhesive layer (B1), and the second pressure-sensitive adhesive layer (B2) are directly laminated. The "first pressure-sensitive adhesive layer (B1)/second pressure-sensitive adhesive layer (B2)" laminated on the backing layer (A) may be present only on one surface side of the backing layer (A), or may be present on each of both surface sides thereof. When the layers are present on each of both surface sides, the pressure-sensitive adhesive sheet of the present invention is a pressure-sensitive adhesive sheet formed of at least five layers including alaminatedstructure"second pressure-sensitive adhesive layer (B2)/first pressure-sensitive adhesive layer (B1)/backing layer (A)/first pressure-sensitive adhesive layer (B1)/second pressure-sensitive adhesive layer (B2)."

The backing layer (A) may be one layer alone, or may be a laminate of two or more layers.

The first pressure-sensitive adhesive layer (B1) may be one layer alone, or may be a laminate of two or more layers.

The second pressure-sensitive adhesive layer (B2) may be one layer alone, or may be a laminate of two or more layers.

The pressure-sensitive adhesive sheet of the present invention may include any appropriate other layer to such an extent that an effect of the present invention is not impaired as long as the sheet is a laminate including the laminated structure "backing layer (A)/first pressure-sensitive adhesive layer (B1)/second pressure-sensitive adhesive layer (B2)."

The pressure-sensitive adhesive sheet of the present invention may contain a tackifier in at least one of the first pressure-sensitive adhesive layer (B1) and the second pressure-sensitive adhesive layer (B2). The incorporation of the tackifier into at least one of the first pressure-sensitive adhesive layer (B1) and the second pressure-sensitive adhesive layer (B2) can provide a pressure-sensitive adhesive sheet having additionally high interlayer adhesiveness.

FIG. 1 is a schematic sectional view of a pressure-sensitive adhesive sheet according to a preferred embodiment of the present invention. A pressure-sensitive adhesive sheet 100 includes a backing layer (A) 1, a first pressure-sensitive adhesive layer (B1) 21, and a second pressure-sensitive adhesive layer (B2) 22. Upon its storage, the pressure-sensitive adhesive sheet illustrated in FIG. 1 is preferably wound into a roll shape so that the backing layer (A) 1 may be the outside.

The thickness of the pressure-sensitive adhesive sheet of the present invention can be set to any appropriate thickness depending on applications. The thickness is preferably 10 µm to 500 µm, more preferably 10 µm to 300 µm, still more preferably 10 µm to 200 µm.

The laminate including the laminated structure "backing layer (A)/first pressure-sensitive adhesive layer (B1)/second pressure-sensitive adhesive layer (B2)" in the pressure-sensitive adhesive sheet of the present invention is preferably formed in an integral manner by co-extrusion molding. That is, in the pressure-sensitive adhesive sheet of the present invention, a lamination surface between the backing layer (A) and the first pressure-sensitive adhesive layer (B1), and a lamination surface between the first pressure-sensitive adhesive layer (B1) and the second pressure-sensitive adhesive layer (B2) are preferably not subjected to a pre-treatment such as a corona treatment, a plasma treatment, a UV light irradiation treatment, or an electron beam irradiation treatment.

The pressure-sensitive adhesive sheet of the present invention has a peel strength upon peeling of the first pressure-sensitive adhesive layer (B1) from the backing layer (A) under the conditions of a measurement temperature of 23°C, a tension speed of 0.3 m/min, and a peel angle of 180° of preferably 2.0 N/20 mm or more, more preferably 2.5 N/20 mm or more, still more preferably 3.0 N/20 mm or more, particularly preferably 3.5 N/20 mm or more. As long as such peel strength falls within the range, a beautiful peeling surface free of any adhesive residue can be formed at the time of peeling from an adherend (such as an optical component). It should be noted that a specific operation upon measurement of the peel strength can be performed in conformity with, for example, the description of Examples to be described later.

The pressure-sensitive adhesive sheet of the present invention has a peel strength upon peeling of the second pressure-sensitive adhesive layer (B2) from the first pressure-sensitive adhesive layer (B1) under the conditions of a measurement temperature of 23°C, a tension speed of 0.3 m/min, and a peel angle of 180 of preferably 2.0 N/20 mm or more, more preferably 2.5 N/20 mm or more, still more preferably 3.0 N/20 mm or more, particularly preferably 3.5 N/20 mm or more. As long as such peel strength falls within the range, a beautiful peeling surface free of any adhesive residue can be formed at the time of peeling from an adherend (such as an optical component). It should be noted that a specific operation upon measurement of the peel strength can be performed in conformity with, for example, the description of Examples to be described later.

When the pressure-sensitive adhesive sheet of the present invention has a peel strength upon peeling of the first pressure-sensitive adhesive layer (B1) from the backing layer (A) under the conditions of a measurement temperature of 23°C, a tension speed of 0.3 m/min, and a peel angle of 180° of preferably 2.0 N/20 mm or more, and has a peel strength upon peeling of the second pressure-sensitive adhesive layer (B2) from the first pressure-sensitive adhesive layer (B1) under the same conditions of preferably 2.0 N/20 mm or more, interlayer adhesiveness between the backing layer (A) and the first pressure-sensitive adhesive layer (B1) improves, and interlayer adhesiveness between the first pressure-sensitive adhesive layer (B1) and the second pressure-sensitive adhesive layer (B2) also improves. Accordingly, a beautiful peeling surface free of any adhesive residue can be formed when the sheet is peeled after having been attached to an adherend.

The pressure-sensitive adhesive sheet of the present invention has an adhesion of the second pressure-sensitive adhesive layer (B2) for a stainless-steel plate (SUS plate) under the conditions of a measurement temperature of 23°C, a tension speed of 0.3 m/min, and a peel angle of 180° of preferably 1.0 N/20 mm or more, more preferably 1.2 N/20 mm or more, still more preferably 1.4 N/20 mm or more, particularly preferably 1.6 N/20 mm or more, most preferably 1.8 N/20 mm or more. However, the preferred range of the adhesion of the pressure-sensitive adhesive sheet of the present invention may vary depending on its mode of use. For example, when the pressure-sensitive adhesive sheet of the present invention is used in the attachment of an optical member, the adhesion is preferably 1.0 N/20 mm or more, more preferably 2.5 to 50.0 N/20 mm. In addition, when the pressure-sensitive adhesive sheet of the present invention is used as a protective film, the adhesion is preferably 0.01 to 10.0 N/20 mm. It should be noted that the measurement of the adhesion can be performed in conformity with JIS-Z-0237 (2000) according to, for example, a method of measuring an adhesion described in Examples to be described later.

### <<A-1. Backing layer (A)>>

Any appropriate thickness can be adopted as the thickness of the backing layer (A) depending on applications. The thickness of the backing layer (A) is preferably 10 µm to 300 µm, more preferably 20 µm to 250 µm, still more preferably 30 to 200 µm.

The backing layer (A) may be one layer alone, or may be a laminate of two or more layers. When the backing layer (A) is a laminate of two or more layers, the number of layers is preferably 2 to 5, more preferably 2 or 3. When the backing layer (A) is one layer alone, the co-extrusion molding upon production of the pressure-sensitive adhesive sheet can be easy. When the backing layer (A) is a laminate of two or more layers, functions can be shared among the respective layers. For example, when the backing layer (A) is a laminate of two layers, a layer that can be easily unwound from a roll body can be adopted as a first backing layer and a layer having good adhesiveness with a pressure-sensitive adhesive layer can be adopted as a second backing layer.

The backing layer (A) preferably contains a thermoplastic resin. Any appropriate thermoplastic resin can be selected as the thermoplastic resin. The content of the thermoplastic resin in the backing layer (A) is preferably 50 to 100 wt%, more preferably 70 to 100 wt%, still more preferably 90 to 100 wt%, particularly preferably 95 to 100 wt%, most preferably substantially 100 wt%.

The backing layer (A) preferably contains a polyolefin-basedresin. Any appropriate polyolefin-based resin can be adopted as the polyolefin-based resin as long as the resin can be formed into a sheet by melt extrusion.

Examples of the polyolefin-based resin include a homopolymer of an α-olefin, a copolymer of two or more kinds of α-olefins, a block polypropylene, a random polypropylene, and a copolymer of one kind or two or more kinds of α-olefins and any other vinyl monomer. As a form of the copolymer, there are given, for example, a block form and a random form.

Preferred examples of the polyolefin-based resin include a homopolymer of an α-olefin, a copolymer of two or more kinds of α-olefins, a block polypropylene, and a random polypropylene. More preferred specific examples of the polyolefin-based resin include a polyethylene (PE), a homopolypropylene (PP), a block polypropylene, and a random polypropylene.

The α-olefin is preferably an α-olefin having 2 to 12 carbon atoms. Examples of such α-olefin include ethylene, propylene, 1-butene, and 4-methyl-1-pentene.

Examples of the homopolymer of an α-olefin include a polyethylene (PE), a homopolypropylene (PP), a poly(1-butene), and a poly(4-methyl-1-pentene).

Examples of the polyethylene (PE) include a low-density polyethylene (LDPE), a linear low-density polyethylene (LLDPE), a medium-density polyethylene, and a high-density polyethylene (HDPE).

The structure of the homopolypropylene may be any one of isotactic, atactic, and syndiotactic structures.

Examples of the copolymer of two or more kinds of α-olefins include an ethylene/propylene copolymer, an ethylene/1-butene copolymer, an ethylene/propylene/1-butene copolymer, a copolymer of ethylene and an α-olefin having 5 to 12 carbon atoms, and a copolymer of propylene and an α-olefin having 5 to 12 carbon atoms.

Examples of the copolymer of one kind or two or more kinds of α-olefins and any other vinyl monomer include an ethylene/vinyl acetate copolymer, an ethylene/alkyl acrylate copolymer, an ethylene/alkyl methacrylate copolymer, and an ethylene-nonconjugated diene copolymer.

The backing layer (A) may include only one kind of polyolefin-based resin, or may include two or more kinds of polyolefin-based resins. As a form including two or more kinds of polyolefin-based resins, there are given, for example, a blend and a copolymer.

As the polyolefin-based resin, a commercially available product may be used.

The backing layer (A) may contain any appropriate additive as required. Examples of the additive that can be incorporated into the backing layer (A) include a UV absorbing agent, a thermal stabilizer, a filler, a lubricant, a colorant (such as a dye), an antioxidant, an anti-build-up agent, an anti-blocking agent, a foaming agent, and a polyethylene imine. The kind, number, and amount of the additive to be incorporated into the backing layer (A) can be appropriately set depending on purposes.

Examples of the UV absorbing agent include a benzotriazole-based compound, a benzophenone-based compound, and a benzoate-based compound. Any appropriate content can be adopted as the content of the UV absorbing agent as long as the UV absorbing agent does not bleed out at the time of the forming. Typically, the content is preferably 0.01 to 5 wt% with respect to the thermoplastic resin in the backing layer (A).

Examples of the thermal stabilizer include a hindered amine-based compound, a phosphorus-based compound, and a cyanoacrylate-based compound. Any appropriate content can be adopted as the content of the thermal stabilizer as long as the thermal stabilizer does not bleed out at the time of the forming. Typically, the content is preferably 0.01 to 5 wt% with respect to the thermoplastic resin in the backing layer (A).

Examples of the filler include inorganic fillers such as talc, titanium oxide, calcium oxide, magnesium oxide, zinc oxide, titanium oxide, calcium carbonate, silica, clay, mica, barium sulfate, whisker, and magnesium hydroxide. The average particle diameter of the filler is preferably 0.1 µm to 10 µm. The content of the filler is preferably 1 to 200 wt% with respect to the thermoplastic resin in the backing layer (A).

### <<A-2. First pressure-sensitive adhesive layer (B1)>>

Any appropriate thickness can be adopted as the thickness of the first pressure-sensitive adhesive layer (B1) depending on applications. The thickness of the first pressure-sensitive adhesive layer (B1) is preferably 1 µm to 100 µm, more preferably 2 µm to 75 µm, still more preferably 3 µm to 50 µm.

The first pressure-sensitive adhesive layer (B1) may be one layer alone, or may be a laminate of two or more layers. When the first pressure-sensitive adhesive layer (B1) is a laminate of two or more layers, the number of layers is preferably 2 to 5, more preferably 2 or 3. When the first pressure-sensitive adhesive layer (B1) is one layer alone, the co-extrusion molding upon production of the pressure-sensitive adhesive sheet can be easy. When the first pressure-sensitive adhesive layer (B1) is a laminate of two or more layers, functions can be shared among the respective layers. For example, when the first pressure-sensitive adhesive layer (B1) is a laminate of two layers, a layer having good adhesiveness with the backing layer can be adopted as one first pressure-sensitive adhesive layer and a layer having good adhesiveness with the second pressure-sensitive adhesive layer can be adopted as the other first pressure-sensitive adhesive layer.

The first pressure-sensitive adhesive layer (B1) preferably contains at least one kind selected from an α-olefin-based thermoplastic elastomer and a styrene-based thermoplastic elastomer. Any appropriate α-olefin-based thermoplastic elastomer can be selected as the α-olefin-based thermoplastic elastomer. Any appropriate styrene-based thermoplastic elastomer can be selected as the styrene-based thermoplastic elastomer. The content of the at least one kind selected from the α-olefin-based thermoplastic elastomer and the styrene-based thermoplastic elastomer in the first pressure-sensitive adhesive layer (B1) is preferably 40 to 100 wt%, more preferably 50 to 100 wt%, still more preferably 60 to 100 wt%.

Any appropriate α-olefin-based elastomer can be adopted as the α-olefin-based thermoplastic elastomer as long as the elastomer can be formed into a film by melt extrusion. The term "α-olefin-based elastomer" refers to an elastomer obtained by using a monomer component containing at least not less than one kind of α-olefin. Such α-olefin-based elastomer is preferably, for example, an amorphous propylene-(1-butene) copolymer. Here, the term "amorphous" as used in this description refers to the following property: the copolymer does not have any clear melting point unlike a crystalline material. The α-olefin-based thermoplastic elastomers may be used alone or in combination.

The amorphous propylene-(1-butene) copolymer can be preferably obtained by copolymerizing propylene and 1-butene with a metallocene catalyst. The amorphous propylene-(1-butene) copolymer obtained by the copolymerization involving using the metallocene catalyst shows a narrow molecular weight distribution (of, for example, 2 or less). The use of the amorphous propylene-(1-butene) copolymer showing such narrow molecular weight distribution can prevent the bleeding of a low-molecular weight component.

The content of a constitutional unit derived from propylene in the amorphous propylene-(1-butene) copolymer is preferably 80 to 99 mol%, more preferably 85 to 99 mol%, still more preferably 90 to 99 mol%. As long as the content of the constitutional unit derived from propylene in the amorphous propylene-(1-butene) copolymer falls within such range, the first pressure-sensitive adhesive layer (B1) excellent in balance between toughness and flexibility can be obtained, and hence the effect of the present invention can be expressed in an additionally effective manner.

The content of a constitutional unit derived from 1-butene in the amorphous propylene-(1-butene) copolymer is preferably 1 to 15 mol%, more preferably 1 to 10 mol%. As long as the content of the constitutional unit derived from 1-butene in the amorphous propylene- (1-butene) copolymer falls within such range, the first pressure-sensitive adhesive layer (B1) excellent in balance between toughness and flexibility can be obtained, and hence the effect of the present invention can be expressed in an additionally effective manner.

Any appropriate copolymerized structure can be adopted as the copolymerized structure of the amorphous propylene-(1-butene) copolymer. Examples of such copolymerized structure include a block copolymer and a random copolymer.

The weight-average molecular weight (Mw) of the amorphous propylene-(1-butene) copolymer is preferably 200,000 or more, more preferably 200,000 to 500,000, still more preferably 200,000 to 300, 000. As long as the weight-average molecular weight (Mw) of the amorphous propylene-(1-butene) copolymer falls within such range, the first pressure-sensitive adhesive layer (B1) having appropriate adhesion can be obtained and hence the effect of the present invention can be expressed in an additionally effective manner.

When the first pressure-sensitive adhesive layer (B1) contains the amorphous propylene-(1-butene) copolymer, the first pressure-sensitive adhesive layer (B1) may further contain a crystalline polypropylene-based resin for adjusting the adhesion of the first pressure-sensitive adhesive layer (B1). When the first pressure-sensitive adhesive layer (B1) contains the crystalline polypropylene-based resin, the adhesion of the first pressure-sensitive adhesive layer (B1) can be moderately reduced and its storage modulus can be increased. When the first pressure-sensitive adhesive layer (B1) further contains the crystalline polypropylene-based resin, the content of the crystalline polypropylene-based resin in the first pressure-sensitive adhesive layer (B1) can be set to any appropriate content depending on desired adhesion and a desired storage modulus. The content of such crystalline polypropylene-based resin is preferably 0 to 50 wt%, more preferably 0 to 40 wt%, still more preferably 0 to 30 wt% with respect to the total weight of the amorphous propylene-(1-butene) copolymer and the crystalline polypropylene-based resin.

Any appropriate styrene-based thermoplastic elastomer can be adopted as the styrene-based thermoplastic elastomer as long as the elastomer can be formed into a film by melt extrusion. The term "styrene-based thermoplastic elastomer" refers to an elastomer obtained by using a monomer component containing at least not less than one kind of styrene-based monomer. The styrene-based thermoplastic elastomers may be used alone or in combination.

Examples of the styrene-based thermoplastic elastomer include styrene-based block copolymers such as: styrene-based AB-type diblock copolymers such as a styrene-ethylene-butylene copolymer (SEB); styrene-based ABA-type triblock copolymers such as a styrene-butadiene-styrene copolymer (SBS), a hydrogenated product of SBS (styrene-ethylene-butylene-styrene copolymer (SEBS)),astyrene-isoprene-styrene copolymer (SIS), a hydrogenated product of SIS (styrene-ethylene-propylene-styrene copolymer (SEPS)), and a styrene-isobutylene-styrene copolymer (SIBS); styrene-based ABAB-type tetrablock copolymers such as styrene-butadiene-styrene-butadiene (SBSB); and styrene-based ABABA-type pentablock copolymers such as styrene-butadiene-styrene-butadiene-styrene (SBSBS). Further examples thereof include hydrogenated products each obtained by hydrogenating ethylenic double bonds of a styrene-based random copolymer such as a styrene-butadiene rubber (SBR).

The content of a styrene block structure in the styrene-based block copolymer is preferably 5 to 40 wt%, more preferably 7 to 30 wt%, still more preferably 9 to 20 wt%. When the content of the styrene block structure is less than 5 wt%, an adhesive residue due to an insufficient cohesive strength of the first pressure-sensitive adhesive layer (B1) is liable to occur. When the content of the styrene block structure is more than 40 wt%, the first pressure-sensitive adhesive layer (B1) becomes hard, and hence good adhesion for a rough surface may not be obtained.

When the styrene-based block copolymer has an ethylene-butylene block structure, the content of a constitutional unit derived from butylene in the ethylene-butylene block structure is preferably 50 wt% or more, more preferably 60 wt% or more, still more preferably 70 wt% or more, particularly preferably 70 to 90 wt%. As long as the content of the constitutional unit derived from butylene falls within such range, a first pressure-sensitive adhesive layer (B1) excellent in wettability and adhesive property, and capable of being favorably bonded even to a rough surface can be obtained.

The first pressure-sensitive adhesive layer (B1) can include any appropriate other component as required. Examples of the other component include: a tackifier; a softening agent; an antioxidant; an olefin-based resin; a silicone-based resin; a liquid acrylic copolymer; a polyethylene imine; a fatty acid amide; a phosphoric acid ester; a hindered amine-based light stabilizer; a UV absorbing agent; a filler or pigment such as calcium oxide, magnesium oxide, silica, zinc oxide, or titanium oxide; and other additives. The kind, number, and amount of the other component that can be incorporated into the first pressure-sensitive adhesive layer (B1) can be appropriately set depending on purposes. The amount of the other component is preferably 5 wt% or less, more preferably 1 wt% or less with respect to the entirety of the first pressure-sensitive adhesive layer (B1).

The tackifier is effective in improving adhesion. In addition, the tackifier can function as a compatibilizer because the tackifier is compatible with each of the first pressure-sensitive adhesive layer (B1) and the second pressure-sensitive adhesive layer (B2). When the first pressure-sensitive adhesive layer (B1) contains the tackifier, the content of the tackifier in the first pressure-sensitive adhesive layer (B1) can be set to any appropriate content in consideration of the prevention of the occurrence of an adhesive residue due to a reduction in cohesive strength. The content of the tackifier in the first pressure-sensitive adhesive layer (B1) is preferably 1 to 60 wt%, more preferably 3 to 50 wt%, still more preferably 4 to 45 wt%, particularly preferably 5 to 40 wt% with respect to the resin component of the first pressure-sensitive adhesive layer (B1).

Examples of the tackifier include a hydrocarbon-based tackifier, a terpene-based tackifier, a rosin-based tackifier, a phenol-based tackifier,an epoxy-based tackifier, a polyamide-based tackifier, an elastomer-based tackifier, and a ketone-based tackifier. The tackifiers in the first pressure-sensitive adhesive layer (B1) may be used alone or in combination.

Examples of the hydrocarbon-based tackifier include: an aliphatic hydrocarbon resin, an aromatic hydrocarbon resin (such as a xylene resin), an aliphatic cyclic hydrocarbon resin, a aliphatic/aromatic petroleum resin (such as a styrene-olefin-based copolymer), an aliphatic/alicyclic petroleum resin, a hydrogenated hydrocarbon resin, a coumarone-based resin, and a coumarone-indene-based resin.

Examples of the terpene-based tackifier include terpene-based resins such as an α-pinene polymer and a β-pinene polymer; and modified terpene-based resins (such as a terpene-phenol-based resin, a styrene-modified terpene-based resin, and a hydrogenated terpene-based resin) each obtained by modifying a terpene-based resin (e.g., phenol modification, aromatic modification, and hydrogenation modification).

Examples of the rosin-based tackifier include: unmodified rosins (raw rosins) such as a gum rosin and a wood rosin; modified rosins (such as a hydrogenated rosin, a disproportionated rosin, a polymerized rosin, and any other chemically modified rosin) each obtained by modifying an unmodified rosin through hydrogenation, disproportionation, polymerization, or the like; and other various rosin derivatives.

Examples of the phenol-based tackifier include resol-type and novolac-type alkylphenols.

The tackifier may be a product commercially available as a blended product with an olefin resin or a thermoplastic elastomer.

A softening agent is effective in improving adhesion. When the first pressure-sensitive adhesive layer (B1) contains the softening agent, any appropriate content can be adopted as the content of the softening agent in the first pressure-sensitive adhesive layer (B1). The content of the softening agent in the first pressure-sensitive adhesive layer (B1) is preferably 40 wt% or less, more preferably 20 wt% or less, still more preferably 10 wt% or less because the amount of an adhesive residue at the time of exposure to high temperatures or outdoors tends to increase when the content of the softening agent in the first pressure-sensitive adhesive layer (B1) becomes excessively large.

Examples of the softening agent include a low-molecular-weight diene-based polymer, a polyisobutylene, a hydrogenated polyisoprene, a hydrogenated polybutadiene, and derivatives thereof. Examples of the derivatives include those each having an OH group or COOH group on one of, or each of both of, its terminals. Specific examples thereof include a hydrogenated polybutadiene diol, a hydrogenated polybutadiene monool, a hydrogenated polyisoprene diol, and a hydrogenated polyisoprene monool. A hydrogenated product of a diene-based polymer such as a hydrogenated polybutadiene or a hydrogenated polyisoprene, an olefin-based softening agent, or the like is preferred in order that a rise in adhesion may be additionally suppressed. Specific examples thereof include a "KURAPRENE LIR-200" manufactured by KURARAY CO., LTD. The softening agents in the first pressure-sensitive adhesive layer (B1) may be used alone or in combination.

The molecular weight of the softening agent can be set to any appropriate value. When the molecular weight of the softening agent is excessively small, the small molecular weight may cause contamination due to bleeding from the first pressure-sensitive adhesive layer (B1). On the other hand, when the molecular weight of the softening agent is excessively large, an improving effect on the adhesive strength tends to be poor. Accordingly, the number-average molecular weight of the softening agent is preferably 5,000 to 100,000, more preferably 10,000 to 50,000.

### <<A-3. Second pressure-sensitive adhesive layer (B2)>>

The thickness of the second pressure-sensitive adhesive layer (B2) can be set to any appropriate thickness depending on applications. The thickness of the second pressure-sensitive adhesive layer (B2) is preferably 1 µm to 100 µm, more preferably 2 µm to 75 µm, still more preferably 3 µm to 50 µm. It should be noted that the second pressure-sensitive adhesive layer (B2) may be protected with a separator or the like temporarily attached thereto as required until put into practical use.

Any appropriate pressure-sensitive adhesive can be adopted as a pressure-sensitive adhesive in the second pressure-sensitive adhesive layer (B2) to such an extent that the effect of the present invention is not impaired. The number of kinds of the pressure-sensitive adhesives constituting the second pressure-sensitive adhesive layer (B2) may be used alone or in combination.

The pressure-sensitive adhesive in the second pressure-sensitive adhesive layer (B2) is preferably, for example, an acrylic block copolymer containing an acrylic acid ester block structure (referred to as "Ac block") and a methacrylic acid ester block structure (referred to as "MAc block"). The second pressure-sensitive adhesive layer (B2) contains more preferably 50 wt% or more, still more preferably 70 wt% or more, particularly preferably 90 wt% or more of such acrylic block copolymer. Such acrylic block copolymers in the second pressure-sensitive adhesive layer (B2) may be contained alone or in combination.

The acrylic block copolymer is preferably a block structure in which an Ac block and an MAc block are alternately arranged. In addition, the total block number of the Ac blocks and the MAc blocks are preferably 3 or more, more preferably 3 to 5.

The Ac block is preferably a block structure derived from a monomer containing an acrylic acid ester as a main component. Specifically, the content of the acrylic acid ester in a monomer for constituting the Ac block is preferably 50 wt% or more, more preferably 70 wt% or more, still more preferably 90 wt% or more, particularly preferably 95 wt% or more, most preferably substantially 100 wt%.

The acrylic acid esters in the monomer for constituting the Ac block may be used alone or in combination.

When the monomer for constituting the Ac block contains a monomer except the acrylic acid ester (other monomer), any appropriate monomer can be adopted as the other monomer.

Examples of the acrylic acid ester in the monomer for constituting the Ac block include an aliphatic hydrocarbon ester of acrylic acid, an alicyclic hydrocarbon ester of acrylic acid, an aromatic hydrocarbon ester of acrylic acid, an ester of an alcohol having an ether bond and acrylic acid, an acrylic acid ester having a hydroxyl group, an acrylic acid ester having an amino group, an acrylic acid ester having an alkoxysilyl group, and an alkylene oxide adduct of acrylic acid.

Examples of the aliphatic hydrocarbon ester of acrylic acid include methyl acrylate, ethyl acrylate, n-propyl acrylate, isopropyl acrylate, n-butyl acrylate, isobutyl acrylate, tert-butyl acrylate, n-pentyl acrylate, n-hexyl acrylate, n-heptyl acrylate, n-octyl acrylate, 2-ethylhexyl acrylate, nonyl acrylate, isononyl acrylate, decyl acrylate, dodecyl acrylate, and stearyl acrylate.

Examples of the alicyclic hydrocarbon ester of acrylic acid include cyclohexyl acrylate and isobornyl acrylate.

Examples of the aromatic hydrocarbon ester of acrylic acid include phenyl acrylate, benzyl acrylate, and toluyl acrylate.

Examples of the ester of an alcohol having an ether bond and acrylic acid include: alkoxyalkyl acrylates such as 2-methoxyethyl acrylate and 2-methoxybutyl acrylate; and epoxy group-containing acrylates such as glycidyl acrylate and methylglycidyl acrylate.

Examples of the acrylic acid ester having a hydroxyl group include hydroxyalkyl acrylates such as 2-hydroxyethyl acrylate, 2-hydroxypropyl acrylate, 3-hydroxypropyl acrylate, 2-hydroxybutyl acrylate, and 4-hydroxybutyl acrylate.

Examples of the acrylic acid ester having an amino group include 2-aminoethyl acrylate, N,N-dimethylaminoethyl acrylate, and N,N-dimethylaminopropyl acrylate.

Examples of the acrylic acid ester having an alkoxysilyl group include 3-acryloxypropyltrimethoxysilane, 3-acryloxypropyltriethoxysilane, 3-acryloxypropylmethyldimethoxysilane, and 3-acryloxypropylmethyldiethoxysilane.

Examples of the alkylene oxide adduct of acrylic acid include an ethylene oxide adduct represented by CH₂=CHCOO (CH₂CH₂O)ₙH (n represents, for example, 1 to 10).

The acrylic acid ester in the monomer for constituting the Ac block is preferably, for example, an aliphatic hydrocarbon ester of acrylic acid. The acrylic acid ester in the monomer for constituting the Ac block is more preferably an acrylic acid alkyl ester having an alkyl group having 1 to 20 carbon atoms, still more preferably an acrylic acid alkyl ester having an alkyl group having 1 to 14 carbon atoms. Particularly preferred examples of the acrylic acid ester in the monomer for constituting the Ac block include methyl acrylate, n-butyl acrylate, tert-butyl acrylate, and 2-ethylhexyl acrylate.

The MAc block is preferably a block structure derived from a monomer containing a methacrylic acid ester as a main component. Specifically, the content of the methacrylic acid ester in the monomer for constituting the MAc block is preferably 50 wt% or more, more preferably 70 wt% or more, still more preferably 90 wt% or more, particularly preferably 95 wt% or more, most preferably substantially 100 wt%.

The methacrylic acid esters in the monomer for constituting the MAc block may be used alone or in combination.

When the monomer for constituting the MAc block contains a monomer except the methacrylic acid ester (other monomer), any appropriate monomer may be adopted as the other monomer.

Examples of the methacrylic acid ester in the monomer for constituting the MAc block include an aliphatic hydrocarbon ester of methacrylic acid, an alicyclic hydrocarbon ester of methacrylic acid, an aromatic hydrocarbon ester of methacrylic acid, an ester of an alcohol containing an ether bond and methacrylic acid, a methacrylic acid ester having a hydroxyl group, a methacrylic acid ester having an amino group, a methacrylic acid ester having an alkoxysilyl group, and an alkylene oxide adduct of methacrylic acid.

Examples of the aliphatic hydrocarbon ester of methacrylic acid include methyl methacrylate, ethyl methacrylate, n-propyl methacrylate, isopropyl methacrylate, n-butyl methacrylate, isobutyl methacrylate, tert-butyl methacrylate, n-pentyl methacrylate, n-hexyl methacrylate, n-heptyl methacrylate, n-octyl methacrylate, 2-ethylhexyl methacrylate, nonyl methacrylate, isononyl methacrylate, decyl methacrylate, dodecyl methacrylate, and stearyl methacrylate.

Examples of the alicyclic hydrocarbon ester of methacrylic acid include cyclohexyl methacrylate and isobornyl methacrylate.

Examples of the aromatic hydrocarbon ester of methacrylic acid include phenyl methacrylate, benzyl methacrylate, and toluyl methacrylate.

Examples of the ester of an alcohol containing an ether bond and methacrylic acid include: alkoxyalkyl methacrylates such as 2-methoxyethyl methacrylate and 2-methoxybutyl methacrylate; and epoxy group-containing methacrylates such as glycidyl methacrylate and methylglycidyl methacrylate.

Examples of the methacrylic acid ester having a hydroxyl group include hydroxyalkyl methacrylates such as 2-hydroxyethyl methacrylate, 2-hydroxypropyl methacrylate, 3-hydroxypropyl methacrylate, 2-hydroxybutyl methacrylate, and 4-hydroxybutyl methacrylate.

Examples of the methacrylic acid ester having an amino group include 2-aminoethyl methacrylate, N,N-dimethylaminoethyl methacrylate, and N,N-dimethylaminopropyl methacrylate.

Examples of the methacrylic acid ester having an alkoxysilyl group include 3-methacryloxypropyltrimethoxysilane, 3-methacryloxypropyltriethoxysilane, 3-methacryloxypropylmethyldimethoxysilane, and 3-methacryloxypropylmethyldiethoxysilane.

Examples of the alkylene oxide adduct of methacrylic acid include an ethylene oxide adduct represented by CH₂=C(CH₃)COO(CH₂CH₂O)ₙH (n represents, for example, 1 to 10).

The methacrylic acid ester in the monomer for constituting the MAc block is preferably, for example, an aliphatic hydrocarbon ester of methacrylic acid. The methacrylic acid ester in the monomer for constituting the MAc block is more preferably a methacrylic acid alkyl ester having an alkyl group having 1 to 20 carbon atoms, still more preferably a methacrylic acid alkyl ester having an alkyl group having 1 to 14 carbon atoms. Particularly preferred examples of the methacrylic acid ester in the monomer for constituting the MAc block include methyl methacrylate and ethyl methacrylate.

The acrylic block copolymer preferably has a block structure in which the Ac block and the MAc block serving as an A block (hard segment) formed of a polymer of a hard structure excellent in cohesive strength and elasticity, and a B block (soft segment) formed of a polymer of a soft structure excellent in viscosity are alternately placed like, for example, an AB type, an ABA type, an ABAB type, or an ABABA type. The second pressure-sensitive adhesive layer (B2) containing the acrylic block copolymer of such structure as a main component can be a pressure-sensitive adhesive layer that has achieved a high level of compatibility between a cohesive strength or elasticity and viscosity. In addition, the second pressure-sensitive adhesive layer(B2) containing the acrylic block copolymer of such structure as a main component can be excellent in extrusion moldability. The acrylic block copolymer preferably has such a block structure that the A blocks (hard segments) are placed at both ends of a molecule (e.g., an ABA type or an ABABA type). The acrylic block copolymer having a block structure with such placement can be excellent in balance between cohesiveness and thermoplasticity.

When the acrylic block copolymer has the two or more A blocks (hard segments), the A blocks may be identical to or different from each other in monomer composition, molecular weight (polymerization degree), structure, and the like.

When the acrylic block copolymer has the two or more B blocks (soft segments), the B blocks may be identical to or different from each other in monomer composition, molecular weight (polymerization degree), structure, and the like.

The MAc block can be preferably adopted as the A block (hard segment).

The Ac block can be preferably adopted as the B block (soft segment).

A preferred form of the block structure of the acrylic block copolymer is, for example, a triblock structure of an "MAc block/Ac block/MAc block (ABA type)" structure. A more preferred form of the block structure of the acrylic block copolymer is, for example, the triblock structure in which the two MAc blocks have structures derived from substantially the same monomer.

With regard to a ratio between the Ac block and MAc block in the acrylic block copolymer in terms of a weight ratio, a weight ratio "Ac block/MAc block" is preferably 96/4 to 10/90, more preferably 93/7 to 20/80, still more preferably 90/10 to 30/70, particularly preferably 80/20 to 50/50. When the ratio of the Ac block is excessively large, the cohesive strength and elasticity of the copolymer may be insufficient. When the ratio of the MAc block is excessively large, its adhesion may be insufficient.

The weight-average molecular weight of the acrylic block copolymer is preferably 30,000 to 300,000, more preferably 35,000 to 250,000, still more preferably 40,000 to 200,000, particularly preferably 50,000 to 150,000. When the weight-average molecular weight of the acrylic block copolymer is less than 30,000, its pressure-sensitive adhesive characteristics and cohesiveness may be liable to reduce. When the weight-average molecular weight of the acrylic block copolymer exceeds 300,000, the thermoplasticity of the acrylic block copolymer is insufficient and hence it may be difficult to form the second pressure-sensitive adhesive layer (B2) by co-extrusion molding.

It should be noted that the weight-average molecular weight of the acrylic block copolymer refers to a value in terms of a polystyrene that can be determined by performing gel permeation chromatography (GPC) measurement on a sample prepared by dissolving the acrylic block copolymer in an appropriate solvent such as tetrahydrofuran. Specifically, the weight-average molecular weight of the acrylic block copolymer can be determined by performing the GPC measurement under conditions described in Examples to be described later.

The glass transition temperature (Tg) of the Ac block is preferably -80 to -10°C, more preferably -75 to -20°C, still more preferably -75 to -50°C.

The glass transition temperature (Tg) of the MAc block is preferably 40 to 240°C, more preferably 60 to 230°C, still more preferably 80 to 230°C.

Here, the glass transition temperature (Tg) of the Ac block or the MAc block refers to a value determined from Fox's equation on the basis of the Tg of the homopolymer of each monomer constituting the block and the content (weight fraction) of the monomer. A value described in, for example, the "HANDBOOK OF PRESSURE-SENSITIVE ADHESIVE TECHNOLOGY" available from Nikkan Kogyo Shimbun Ltd. or the "Polymer Handbook" available from Wiley-Interscience can be adopted as the Tg of the homopolymer. For example, -70°C can be adopted as the Tg of 2-ethylhexyl acrylate, -54°C can be adopted as the Tg of n-butyl acrylate, and 105°C can be adopted as the Tg of methyl methacrylate.

The acrylic block copolymer can be obtained by copolymerization with any appropriate other monomer except an acrylic acid ester and a methacrylic acid ester. Examples of such other monomer include: cyano group-containing vinyl compounds such as acrylonitrile and methacrylonitrile; vinyl esters such as vinyl acetate and vinyl propionate; aromatic vinyl compounds such as styrene and α-methylstyrene; vinyl group-containing heterocyclic compounds such as N-vinylpyrrolidone; amide group-containing vinyl compounds such as acrylamide and methacrylamide; unsaturated monocarboxylic acids such as acrylic acid and methacrylic acid and salts thereof (such as a sodium salt and a potassium salt) ; unsaturated dicarboxylic acids such as maleic acid and fumaric acid and salts thereof (such as a sodium salt and a potassium salt); unsaturated dicarboxylic anhydrides such as maleic anhydride; and fluorinated alkyl (meth)acrylates such as methyl 2-(trifluoromethyl)(meth)acrylate, methyl 2-(perfluoroethyl)(meth)acrylate, ethyl 2-(trifluoromethyl)(meth)acrylate, ethyl 2-(perfluoroethyl)(meth)acrylate, ethyl 2-(perfluorohexyl)(meth)acrylate, ethyl 2-(perfluorodecyl)(meth)acrylate, ethyl 2-(perfluorohexadecyl)(meth)acrylate, and ethyl 2-(perfluorobutyl)(meth)acrylate. Such other monomers may be used alone or in combination.

The other monomer can be incorporated for, for example, adjusting the characteristics (such as pressure-sensitive adhesive characteristics and extrusion moldability) of the second pressure-sensitive adhesive layer (B2). A structure portion derived from the other monomer can be introduced in the form of a random copolymer, a block copolymer, a graft copolymer, or the like into, for example, the Ac block or the MAc block.

The content of the other monomer in the monomers for constituting the acrylic block copolymer is preferably 20 wt% or less, more preferably 10 wt% or less, still more preferably 5 wt% or less, particularly preferably substantially 0 wt% in the monomers for constituting the acrylic block copolymer. When the content of the other monomer in the monomers for constituting the acrylic block copolymer is excessively large, the transparency of the second pressure-sensitive adhesive layer (B2) may be impaired.

It is particularly preferred that the monomers constituting the acrylic block copolymer be substantially free of an acidic group-containing monomer as the other monomer. The second pressure-sensitive adhesive layer(B2) containing such acrylic block copolymer can show additionally low property to corrode an adherend. For example, in a pressure-sensitive adhesive sheet for an application where an adherend (such as a component part for a touch panel) having a transparent electrode made of indium tin oxide (ITO) or the like is attached, it is particularly preferred that the property of a pressure-sensitive adhesive layer to corrode the adherend be low. The acrylic block copolymer constituted of the monomers substantially free of the acidic group-containing monomer as the other monomer is preferred because of the following reason as well. An excessive increase in melt viscosity of the pressure-sensitive adhesive layer can be avoided.

The acrylic block copolymer can be produced by any appropriate method. The method of producing the acrylic block copolymer is, for example, a production method involving utilizing a living polymerization method. According to the living polymerization method, an acrylic block copolymer excellent in thermoplasticity and having good extrusion moldability can be produced by excellent structure control unique to the living polymerization method while transparency and weatherability inherent in the acrylic block copolymer are maintained. Inaddition, according to the living polymerization method, the molecular weight distribution of the acrylic block copolymer can be controlled so as to be narrow. Accordingly, a reduction in cohesiveness (such as an adhesive residue upon peeling) resulting from the presence of a low-molecular weight component is suppressed and hence a pressure-sensitive adhesive sheet excellent in adhesion to a backing can be provided.

In addition, the acrylic block copolymer can be obtained as a commercial product. Examples of the acrylic block copolymer that can be obtained as a commercial product include a series of products available under the trade name "KURARITY (development name "LA Polymer")" from KURARAY CO., LTD. (such as an LA2140e and an LA2250).

The second pressure-sensitive adhesive layer (B2) can contain any appropriate component except the acrylic block copolymer for the purpose of, for example, controlling its pressure-sensitive adhesive characteristics. Such appropriate component is, for example, a polymer except the acrylic block copolymer called an oligomer (having a weight-average molecular weight of, for example, 500 to 5,000). Examples of such oligomer include: an acrylic polymer that is a random copolymer of monomers containing an acrylic monomer (such as an acrylic acid ester or a methacrylic acid ester) as a main component and does not have any block structure; an olefin-based resin; and a silicone-based polymer. In addition, a polymer excellent in compatibility with the acrylic block copolymer is preferably selected as such appropriate component in order that the transparency of the second pressure-sensitive adhesive layer (B2) may not be impaired. The appropriate components may be used alone or in combination.

The content of the appropriate component is preferably 50 parts by weight or less, more preferably 10 parts by weight or less, still more preferably 5 parts by weight or less, particularly preferably substantially 0 parts by weight with respect to 100 parts by weight of the acrylic block copolymer.

The second pressure-sensitive adhesive layer (B2) can contain any appropriate other component as required. Examples of the other component include a tackifier, a filler, coloring agents (such as a dye), an antioxidant, a chelate compound of a metal, and cross-linking agents (such as a polyfunctional isocyanate, a polyfunctional amine, and a polyfunctional alcohol). The kinds, number, and amount of other components that can be incorporated into the second pressure-sensitive adhesive layer (B2) can be appropriately set depending on purposes. The amount of the other components is preferably 5 wt% or less, more preferably 1 wt% or less with respect to the entirety of the second pressure-sensitive adhesive layer (B2) from the viewpoint of utilizing the transparency of the acrylic block copolymer.

The tackifier is effective in improving adhesion. In addition, the tackifier can function as a compatibilizer because the tackifier is compatible with each of the first pressure-sensitive adhesive layer (B1) and the second pressure-sensitive adhesive layer (B2). When the second pressure-sensitive adhesive layer (B2) contains the tackifier, the content of the tackifier in the second pressure-sensitive adhesive layer (B2) can be set to any appropriate content in consideration of the prevention of the occurrence of an adhesive residue due to a reduction in cohesive strength. The content of the tackifier in the second pressure-sensitive adhesive layer (B2) is preferably 1 to 60 wt%, more preferably 3 to 50 wt%, still more preferably 4 to 45 wt%, particularly preferably 5 to 40 wt% with respect to the resin component of the second pressure-sensitive adhesive layer (B2).

Examples of the tackifier include a hydrocarbon-based tackifier, a terpene-based tackifier, a rosin-based tackifier, a phenol-based tackifier, an epoxy-based tackifier, a polyamide-based tackifier, an elastomer-based tackifier, and a ketone-based tackifier. The tackifiers in the first pressure-sensitive adhesive layer (B1) may be used alone or in combination.

Examples of the hydrocarbon-based tackifier include an aliphatic hydrocarbon resin, an aromatic hydrocarbon resin (such as a xylene resin), an aliphatic cyclic hydrocarbon resin, an aliphatic/aromatic petroleum resin (such as a styrene-olefin-based copolymer), an aliphatic/alicyclic petroleum resin, a hydrogenated hydrocarbon resin, a coumarone-based resin, and a coumarone-indene-based resin.

Examples of the terpene-based tackifier include: terpene-based resins such as an α-pinene polymer and a β-pinene polymer; and modified terpene-based resins (such as a terpene-phenol-based resin, a styrene-modified terpene-based resin, and a hydrogenated terpene-based resin) each obtained by modifying a terpene-based resin (e.g., phenol modification, aromatic modification, and hydrogenation modification).

Examples of the rosin-based tackifier include: unmodified rosins (raw rosin) such as a gum rosin and a wood rosin; modified rosins (such as a hydrogenated rosin, a disproportionated rosin, a polymerized rosin, and any other chemically modified rosin) each obtained by modifying an unmodified rosin through hydrogenation, disproportionation, polymerization, or the like; and other various rosin derivatives.

Examples of the phenol-based tackifier include resol-type and novolac-type alkylphenols.

The tackifier may be a product commercially available as a blended product with an olefin resin or a thermoplastic elastomer.

Examples of the filler include inorganic fillers such as talc, titanium oxide, calcium oxide, magnesium oxide, zinc oxide, titanium oxide, calcium carbonate, silica, clay, mica, barium sulfate, whisker, and magnesium hydroxide. The average particle diameter of the filler is preferably 0.1 µm to 10 µm.

### ««B. Method of producing pressure-sensitive adhesive sheet»»

The pressure-sensitive adhesive sheet of the present invention is a pressure-sensitive adhesive sheet as a laminate including a laminated structure "backing layer (A)/first pressure-sensitive adhesive layer (B1) /second pressure-sensitive adhesive layer (B2)," and is obtained by integrating formation materials for the laminate including a formation material (a) for the backing layer (A), a formation material (b1) for the first pressure-sensitive adhesive layer (B1), and a formation material (b2) for the second pressure-sensitive adhesive layer (B2) through co-extrusion molding.

The co-extrusion molding can be performed by using an extruder and a co-extrusion die for the formation materials for the respective layers in conformity with, for example, an inflation method or a T-die method. The co-extrusion molding integrates the respective layers derived from the respective formation materials to provide the laminate.

In the method of producing the pressure-sensitive adhesive sheet of the present invention, the laminate obtained by integrating the layers through the co-extrusion molding may be irradiated with an ionizing radiation. Specifically, for example, the resultant laminate may be irradiated with the ionizing radiation before being wound into a roll shape or in a state of being unwound again after having been wound into a roll shape. The irradiation with the ionizing radiation is preferably performed under an inert gas atmosphere such as nitrogen. Examples of the ionizing radiation include an X-ray, a γ-ray, UV light, a visible ray, and an electron beam. The electron beam is preferred as the ionizing radiation because of, for example, the following reasons. The ratio at which a reaction active species is produced upon irradiation with the electron beam is high and the depth to which the electron beam penetrates an object to be irradiated therewith is large. Various electron beam accelerators of, for example, a Cockroft-Walton type, a van de Graaff type, a resonance transformer type, an insulating core transformer type, a linear type, a dynamitron type, and a high-frequency type can each be used as an electron beam source. The ionizing radiation may be applied from one side of the laminate or may be applied from each of both of its sides. In terms of the simplification of the step, the irradiation with the ionizing radiation is preferably performed as described below. Before being wound into a roll shape, the laminate is introduced into an ionizing radiation irradiation apparatus where the laminate is irradiated with the ionizing radiation. The irradiation dose of the ionizing radiation is preferably 10 to 500 kGy, more preferably 10 to 400 kGy, still more preferably 10 to 300 kGy from the viewpoints of improving interlayer adhesiveness and maintaining the physical properties of the pressure-sensitive adhesive sheet. An acceleration voltage for the ionizing radiation can be appropriately selected depending on the kind of a resin to be used in the pressure-sensitive adhesive sheet and the thickness of the pressure-sensitive adhesive sheet. The acceleration voltage for the ionizing radiation preferably falls within the range of 50 to 300 kV in ordinary cases. The irradiation with the ionizing radiation may be performed once or may be performed a plurality of times (preferably twice).

The pressure-sensitive adhesive sheet of the present invention can be appropriately stretched uniaxially, i.e., in its lengthwise direction (extrusion direction) or widthwise direction (direction perpendicular to the extrusion direction), or biaxially, i.e., in its lengthwise direction and widthwise direction. A stretching ratio in the lengthwise direction upon stretching is, for example, preferably 1.01 to 10 times, more preferably 1.01 to 5 times, still more preferably 1.01 to 3 times. A stretching ratio in the widthwise direction is, for example, preferably 1.01 to 8 times, more preferably 1.01 to 4 times, still more preferably 1.01 to 2.5 times. The stretching may be performed in one stage per axis, or may be performed in two or more stages depending on the use applications of the pressure-sensitive adhesive sheet. A stretching temperature upon stretching preferably falls within the range of (Tg-20°C) to (Tg+50°C) with respect to the glass transition temperature (Tg) of the polymer constituting the backing layer (A) from the viewpoint of, for example, stretchability.

### Examples

Hereinafter, the present invention is described specifically by way of examples. However, the present invention is by no means limited to these examples. It should be noted that test and evaluation methods in the examples and the like are as described below. In addition, the term "part(s)" means "part(s) by weight."

### (1) Measurement of weight-average molecular weight

GPC measurement was performed under the following conditions.
Measurement apparatus: manufactured by TOSOH CORPORATION, model "HLC-8120GPC"
Columns: manufactured by TOSOH CORPORATION, TSKgel SuperHZM-H/HZ4000+HZ3000+HZ2000 were used by being connected in series.
Column size: each column had an inner diameter of 6.0 mm and a length of 15.0 cm.
Column temperature: 40°C
Flow rate: 0.6 mL/min
Eluent: tetrahydrofuran
Sample injection amount: 20 µL
Detector: RI (differential refractive index detector)
Standard sample: polystyrene

### (2) Measurement of peel strength

An acrylic pressure-sensitive adhesive sheet (manufactured by Nitto Denko Corporation, trade name: "No. 31B") was attached to the pressure-sensitive adhesive layer surface side of a pressure-sensitive adhesive sheet. Next, a strap-shaped test piece having a length of 100 mm and a width of 20 mm was cut out of the resultant. An SUS plate was backed with the test piece, and then the acrylic pressure-sensitive adhesive sheet (No. 31B) was peeled up to a position at 30 mm in the lengthwise direction from one end of the test piece together with a pressure-sensitive adhesive layer of the pressure-sensitive adhesive sheet. Alternatively, when it was difficult to peel the pressure-sensitive adhesive layer owing to its good adhesiveness with a backing, only the acrylic pressure-sensitive adhesive sheet was peeled (a peeling interface in the case where the acrylic pressure-sensitive adhesive sheet was able to be peeled together with the pressure-sensitive adhesive layer was present between the backing layer (A) and the first pressure-sensitive adhesive layer (B1) or between the first pressure-sensitive adhesive layer (B1) and the second pressure-sensitive adhesive layer (B2), and a peeling interface in the case where the pressure-sensitive adhesive layer could not be peeled was present between the second pressure-sensitive adhesive layer (B2) and the acrylic pressure-sensitive adhesive sheet (No. 31B)). The test piece from which the acrylic pressure-sensitive adhesive sheet had been partly peeled was grasped with a chuck of a tensile tester and then the sheet was peeled in the 180° direction at a tension speed of 300 mm/min, followed by the measurement of a peel strength needed for the peeling. When the measured peel strength is, for example, 2.0 N/20 mm or more, a peel strength upon peeling of the pressure-sensitive adhesive layer laminated so as to be adjacent to the backing layer from the layer is 2.0 N/20 mm or more, and a peel strength upon peeling of the plurality of pressure-sensitive adhesive layers adjacent to each other is 2.0 N/20 mm or more.

### (3) Measurement of adhesion

A strap-shaped test piece having a length of 100 mm and a width of 20 mm was cut out of a pressure-sensitive adhesive sheet, and its adhesion was measured in conformity with JIS-Z-0237 (2000). Specifically, an SUS430BA plate was used as an adherend and its surface was washed with toluene. The pressure-sensitive adhesive layer surface of the test piece was crimped onto the surface of the adherend by reciprocating a 2-kg roller once, and 30 minutes after that, the adhesion was measured by peeling the test piece in the 180° direction at a tension speed of 300 mm/min.

### (Production Example 1)

### <Production of acrylic block copolymer Ac1>

The inside of a reaction vessel having a volume of 2 L and provided with a nitrogen-introducing tube, a temperature gauge, and a stirring machine was replaced with a nitrogen gas, and then 800 mL of toluene, 2.5 mL of N,N,N',N",N"-pentamethyldiethylenetriamine, 34 mL of a 0.6-mol/L solution of isobutyl bis(2,6-di-t-butyl-4-methylphenoxy)aluminum in toluene, and 3.5 mL of a 1.3-mol/L solution of sec-butyllithium in toluene were loaded into the vessel. 27 Milliliters of methyl methacrylate (MMA) were added to the mixture and then the whole was subjected to a reaction at room temperature for 3 hours. Next, the reaction liquid was cooled to -15 °C and then 160 mL of n-butyl acrylate (BA) were dropped to the reaction liquid over 7 hours. Subsequently, 27 mL of MMA were added to the reaction liquid and then its temperature was returned to room temperature, followed by stirring for 10 hours. The reaction liquid was poured into a large amount of methanol and then the deposited precipitate was recovered to provide an acrylic block copolymer having a polyMMA-polyBA-polyMMA triblock structure. The resultant acrylic block copolymer had an Mw (weight-average molecular weight) of 8.0×10⁴, and a mass ratio between the polyMMA blocks (total mass of the two blocks) and the polyBA block of 25/75. Hereinafter, the acrylic block copolymer is referred to as "Ac1."

### (Production Example 2)

### <Production of acrylic block copolymer Ac2>

The inside of a reaction vessel having a volume of 2 L and provided with a nitrogen-introducing tube, a temperature gauge, and a stirring machine was replaced with a nitrogen gas, and then 800 mL of toluene, 2.5 mL of N,N,N',N",N"-pentamethyldiethylenetriamine, 34 mL of a 0.6-mol/L solution of isobutyl bis(2,6-di-t-butyl-4-methylphenoxy)aluminum in toluene, and 3.5 mL of a 1.3-mol/L solution of sec-butyllithium in toluene were loaded into the vessel. 27 Milliliters of MMA were added to the mixture and then the whole was subjected to a reaction at room temperature for 3 hours. Next, the reaction liquid was cooled to -15°C and then 225 mL of 2-ethylhexyl acrylate (2EHA) were dropped to the reaction liquid over 7 hours. Subsequently, 27 mL of MMA were added to the reaction liquid and then its temperature was returned to room temperature, followed by stirring for 10 hours. The reaction liquid was poured into a large amount of methanol and then the deposited precipitate was recovered to provide an acrylic block copolymer having a polyMMA-poly2EHA-polyMMA triblock structure. The resultant acrylic block copolymer had an Mw of 8.5×10⁴, and a mass ratio between the polyMMA blocks (total mass of the two blocks) and the poly2EHA block of 25/75. Hereinafter, the acrylic block copolymer is referred to as "Ac2."

### (Example 1)

A low-density polyethylene (LDPE) (manufactured by TOSOH CORPORATION, trade name: "Petrocene 190") as a backing layer formation material, an α-olefin-based pressure-sensitive adhesive (AO) (manufactured by Sumitomo Chemical Company, Limited, trade name: "Tafthren H5002") as a first pressure-sensitive adhesive layer formation material, and an acrylic block copolymer (manufactured by KURARAY CO., LTD., trade name: "KURARITY LA2140e, "Mw=8.0×10⁴) (hereinafter, the acrylic block copolymer is referred to as "Ac3") as a second pressure-sensitive adhesive layer formation material were loaded into an extruder and then subjected to melt extrusion from a T-die to be formed into a sheet shape in which a backing layer (having a thickness of 50 µm), a first pressure-sensitive adhesive layer (having a thickness of 10 µm), and a second pressure-sensitive adhesive layer (having a thickness of 10 µm) overlapped one another. After that, the sheet was wound into a roll shape to provide a pressure-sensitive adhesive sheet (1).
Table 1 shows the results of the evaluations of the pressure-sensitive adhesive sheet (1).

### (Example 2)

A pressure-sensitive adhesive sheet (2) was obtained in the same manner as in Example 1 except that the Ac1 (acrylic block copolymer having a polyMMA-polyBA-polyMMA triblock structure) was used as the second pressure-sensitive adhesive layer formation material.
Table 1 shows the results of the evaluations of the pressure-sensitive adhesive sheet (2).

### (Example 3)

A pressure-sensitive adhesive sheet (3) was obtained in the same manner as in Example 1 except that the Ac2 (acrylic block copolymer having a polyMMA-poly2EHA-polyMMA triblock structure) was used as the second pressure-sensitive adhesive layer formation material.
Table 1 shows the results of the evaluations of the pressure-sensitive adhesive sheet (3).

### (Example 4)

A pressure-sensitive adhesive sheet (4) was obtained in the same manner as in Example 1 except that a polystyrene-polyisobutylene-polystyrene block copolymer (SIBS) (manufactured by Kaneka Corporation, trade name: "SIBSTAR 072T") was used as the first pressure-sensitive adhesive layer formation material.
Table 1 shows the results of the evaluations of the pressure-sensitive adhesive sheet (4).

### (Example 5)

A pressure-sensitive adhesive sheet (5) was obtained in the same manner as in Example 1 except that a mixture of 100 parts by weight of a styrene-ethylene-butylene-styrene block copolymer (SEBS) (manufactured by JSR Corporation, trade name: "DYNARON 8600P") and 20 parts by weight of a terpene-phenol copolymer (manufactured by YASUHARA CHEMICAL CO., LTD., trade name: "YS Polyster TH130") as a tackifier (hereinafter referred to as "SEBS (20) ") was used as the first pressure-sensitive adhesive layer formation material.
Table 1 shows the results of the evaluations of the pressure-sensitive adhesive sheet (5).

### (Example 6)

A pressure-sensitive adhesive sheet (6) was obtained in the same manner as in Example 1 except that a mixture of 100 parts by weight of an SEBS (manufactured by JSR Corporation, trade name: "DYNARON 8600P") and 38 parts by weight of a terpene-phenol copolymer (manufactured by YASUHARA CHEMICAL CO., LTD., trade name: "YS Polyster TH130") as a tackifier (hereinafter referred to as "SEBS (38) ") was used as the first pressure-sensitive adhesive layer formation material.
Table 1 shows the results of the evaluations of the pressure-sensitive adhesive sheet (6).

### (Example 7)

A pressure-sensitive adhesive sheet (7) was obtained in the same manner as in Example 1 except that a mixture of 100 parts by weight of the Ac3 and 38 parts by weight of a terpene-phenol copolymer (manufactured by YASUHARA CHEMICAL CO., LTD., trade name: "YS Polyster TH130") as a tackifier (hereinafter referred to as "AC3 (38) ") was used as the second pressure-sensitive adhesive layer formation material.
Table 1 shows the results of the evaluations of the pressure-sensitive adhesive sheet (7).

### (Example 8)

A pressure-sensitive adhesive sheet (8) was obtained in the same manner as in Example 1 except that the SEBS(38) was used as the first pressure-sensitive adhesive layer formation material and the AC3 (38) was used as the second pressure-sensitive adhesive layer formation material.
Table 1 shows the results of the evaluations of the pressure-sensitive adhesive sheet (8).

### (Comparative Example 1)

A pressure-sensitive adhesive sheet (C1) was obtained in the same manner as in Example 1 except that an LDPE (manufactured by TOSOH CORPORATION, trade name: "Petrocene 190") was used as an intermediate layer formation material instead of the first pressure-sensitive adhesive layer formation material.
Table 2 shows the results of the evaluations of the pressure-sensitive adhesive sheet (C1).

### (Comparative Example 2)

A pressure-sensitive adhesive sheet (C2) was obtained in the same manner as in Example 1 except that a high-density polyethylene (HDPE) (manufactured by Japan Polyethylene Corporation, trade name: "NOVATEC HJ580") was used as an intermediate layer formationmaterial instead of the first pressure-sensitive adhesive layer formation material.
Table 2 shows the results of the evaluations of the pressure-sensitive adhesive sheet (C2).

### (Comparative Example 3)

A pressure-sensitive adhesive sheet (C3) was obtained in the same manner as in Example 1 except that a random polypropylene (r-PP) (manufactured by Sumitomo Chemical Company, Limited, trade name: "NOBLEN S131") was used as an intermediate layer formation material instead of the first pressure-sensitive adhesive layer formation material.
Table 2 shows the results of the evaluations of the pressure-sensitive adhesive sheet (C3).

### (Comparative Example 4)

A pressure-sensitive adhesive sheet (C4) was obtained in the same manner as in Example 1 except that an ethylene-vinyl acetate copolymer (EVA) (manufactured by TOSOH CORPORATION, trade name: "Ultrathene 752") was used as an intermediate layer formation material instead of the first pressure-sensitive adhesive layer formation material.
Table 2 shows the results of the evaluations of the pressure-sensitive adhesive sheet (C4).

### (Comparative Example 5)

A pressure-sensitive adhesive sheet (C5) was obtained in the same manner as in Example 1 except that an ethylene-methyl methacrylate copolymer (EMMA) (manufactured by Sumitomo Chemical Company, Limited, trade name: "ACRYFT WH302") was used as an intermediate layer formation material instead of the first pressure-sensitive adhesive layer formation material.
Table 2 shows the results of the evaluations of the pressure-sensitive adhesive sheet (C5).

### (Comparative Example 6)

A sheet shape in which the backing layer and the first pressure-sensitive adhesive layer overlapped each other was formed in the same manner as in Example 1 except that the sheet was formed only from two layers without laminating the second pressure-sensitive adhesive layer. After that, an aqueous solution of an acrylic random copolymer (emulsion of an ether sulfate-type anionic surfactant (manufactured by Kao Corporation, trade name: "LATEMUL E-118B") containing a copolymer using 95 wt% of BA and 5 wt% of AA as constituent monomers (weight-average molecular weight: 800, 000) (hereinafter, the emulsion of the acrylic random copolymer is referred to as "EmAc")) was applied as the second pressure-sensitive adhesive layer formation material onto the first pressure-sensitive adhesive layer so as to have a thickness of 10 µm. Thus, a pressure-sensitive adhesive sheet (C6) was obtained.
Table 2 shows the results of the evaluations of the pressure-sensitive adhesive sheet (C6).

### (Comparative Example 7)

An attempt was made to form a sheet shape in which the backing layer, the first pressure-sensitive adhesive layer, and the second pressure-sensitive adhesive layer overlapped one another in the same manner as in Example 1 except that an acrylic random copolymer (copolymer using 95 wt% of BA and 5 wt% of acrylic acid (AA) as constituent monomers (weight-average molecular weight: 500,000)) was used as the second pressure-sensitive adhesive layer formation material. However, no pressure-sensitive adhesive sheet could be obtained because the second pressure-sensitive adhesive layer formation material did not plasticize even when heated and hence could not be ejected from an extruder.

### (Comparative Example 8)

An attempt was made to form a sheet shape in which the backing layer, the first pressure-sensitive adhesive layer, and the second pressure-sensitive adhesive layer overlapped one another in the same manner as in Example 1 except that a cross-linked acrylic random copolymer (pressure-sensitive adhesive obtained by adding 2 wt% of an isocyanate-based cross-linking agent (manufactured by Nippon Polyurethane Industry Co., Ltd., trade name: "CORONATE L") to a copolymer using 95 wt% of BA and 5 wt% of AA as constituent monomers (weight-average molecular weight: 500,000) to cross-link the copolymer) was used as the second pressure-sensitive adhesive layer formation material. However, no pressure-sensitive adhesive sheet could be obtained because the second pressure-sensitive adhesive layer formation material did not plasticize even when heated and hence could not be ejected from an extruder.

**[Table 1]**

| | | Pressure-sensitive adhesive sheet | | | | | | | |
|---|---|---|---|---|---|---|---|---|---|
| | | (1) | (2) | (3) | (4) | (5) | (6) | (7) | (8) |
| Backing layer (A) | Material name | LDPE | LDPE | LDPE | LDPE | LDPE | LDPE | LDPE | LDPE |
| | Thickness[µm] | 50 | 50 | 50 | 50 | 50 | 50 | 50 | 50 |
| First pressure-sensitive adhesive layer (B1) | Material name | AO | AO | AO | SIBS | SEBS(20) | SEBS(38) | SEBS | SEBS(38) |
| | Thickness [µm] | 10 | 10 | 10 | 10 | 10 | 10 | 10 | 10 |
| Second pressure-sensitive adhesive layer (B2) | Material name | Ac3 | Ac1 | Ac2 | Ac3 | Ac3 | Ac3 | Ac3 (38) | Ac3 (38) |
| | Thickness [µm] | 10 | 10 | 10 | 10 | 10 | 10 | 10 | 10 |
| Peel strength | [N/20 mm] | 7.9 | 7.2 | 8.0 | 7.2 | 6.3 | 7.2 | 9.1 | 8.6 |
| | Peeling interface | B2/No.31B | B2/No.31B | B2/No.31B | B2/No.31B | B2/No.31B | B2/No.31D | B2/No.31B | B2/No.31B |
| Adhesion | [N/20 mm] | 3.2 | 2.2 | 3.4 | 2.9 | 2.2 | 2.7 | 3.2 | 3.4 |

**[Table 2]**

| | | Pressure-sensitive adhesive sheet | | | | | | Pressure-sensitive adhesive sheet |
|---|---|---|---|---|---|---|---|---|
| | | (C1) | (C2) | (C3) | (C4) | (C5) | | (C6) |
| Backing layer (A) | Material name | LDPE | LDPE | LDPE | LDPE | LDPE | Backing layer (A) | LDPE |
| | Thickness [µm] | 50 | 50 | 50 | 50 | 50 | | 50 |
| Intermediate layer | Material name | LDPE | HDPE | r-PP | EVA | EMMA | First pressure-sensitive adhesive layer (B1) | AO |
| | Thickness [µm] | 10 | 10 | 10 | 10 | 10 | | 10 |
| Second pressure-sensitive adhesive layer (B2) | Material name | Ac3 | Ac3 | Ac3 | Ac3 | Ac3 | Second pressure-sensitive adhesive layer (B2) | EmAc |
| | Thickness [µm] | 10 | 10 | 10 | 10 | 10 | | 10 |
| Peel strength | [N/20 mm] | 0.2 | 1.8 | 0.6 | 0.7 | 0.1 | Peel strength | 1.0 |
| | Peeling interface | Intermediate layer/B2 | Intermediate layer/B2 | Intermediate layer/B2 | Intermediate layer/B2 | Intermediate layer/B2 | | B1/B2 |
| Adhesion | [N/20 mm] | An adhesive residue occurs on the adhered. | An adhesive residue occurs on the adhered. | An adhesive residue occurs on the adhered. | An adhesive residue occurs on the adhered. | An adhesive residue occurs on the adhered. | Adhesion | An adhesive residue occurs on the adhered. |

As shown in Examples 1 to 8 of Table 1, it can be confirmed that the pressure-sensitive adhesive sheet of the present invention can express good interlayer adhesiveness and can express good adhesion.

### (Example 9)

A low-density polyethylene (LDPE) (manufactured by TOSOH CORPORATION, trade name: "Petrocene 190") as a backing layer formation material, a mixture obtained by adding a terpene-phenol copolymer (manufactured by YASUHARA CHEMICAL CO., LTD., trade name: "YS Polyster TH130") as a tackifier at a ratio of 17 wt% with respect to a styrene-ethylene-butylene-styrene block copolymer (SEBS) (manufactured by JSR Corporation, trade name: "DYNARON 8600P") (hereinafter referred to as "SEBS(17)") as a first pressure-sensitive adhesive layer formation material, and the Ac3 as a second pressure-sensitive adhesive layer formation material were loaded into an extruder and then subjected to melt extrusion from a T-die to be formed into a sheet shape in which a backing layer (having a thickness of 50 µm), a first pressure-sensitive adhesive layer (having a thickness of 10 µm), and a second pressure-sensitive adhesive layer (having a thickness of 10 µm) overlapped one another. After that, the sheet was wound into a roll shape to provide a pressure-sensitive adhesive sheet (9).
Table 3 shows the results of the evaluations of the pressure-sensitive adhesive sheet (9).

### (Example 10)

A pressure-sensitive adhesive sheet (10) was obtained in the same manner as in Example 9 except that a mixture obtained by adding a terpene-phenol copolymer (manufactured by YASUHARA CHEMICAL CO. , LTD., trade name: "YS Polyster TH130") as a tackifier at a ratio of 27 wt% with respect to an SEBS (manufactured by JSR Corporation, trade name: "DYNARON 8600P") (hereinafter referred to as "SEBS (27)") was used as the first pressure-sensitive adhesive layer formation material.
Table 3 shows the results of the evaluations of the pressure-sensitive adhesive sheet (10).

### (Example 11)

A pressure-sensitive adhesive sheet (11) was obtained in the same manner as in Example 9 except that a mixture obtained by adding a terpene-phenol copolymer (manufactured by YASUHARA CHEMICAL CO. , LTD., trade name: "YS Polyster TH130") as a tackifier at a ratio of 27 wt% with respect to the Ac3 (hereinafter referred to as "Ac3 (27) ") was used as the second pressure-sensitive adhesive layer formation material.
Table 3 shows the results of the evaluations of the pressure-sensitive adhesive sheet (11).

### (Example 12)

A pressure-sensitive adhesive sheet (12) was obtained in the same manner as in Example 9 except that the SEBS(27) was used as the first pressure-sensitive adhesive layer formation material and the Ac3 (27) was used as the second pressure-sensitive adhesive layer formation material.
Table 3 shows the results of the evaluations of the pressure-sensitive adhesive sheet (12).

### (Comparative Example 9)

A pressure-sensitive adhesive sheet (C9) was obtained in the same manner as in Example 9 except that an LDPE (manufactured by TOSOH CORPORATION, trade name: "Petrocene 190") was used as an intermediate layer formation material instead of the first pressure-sensitive adhesive layer formation material.
Table 3 shows the results of the evaluations of the pressure-sensitive adhesive sheet (C9).

### (Comparative Example 10)

A pressure-sensitive adhesive sheet (C10) was obtained in the same manner as in Example 9 except that an SEBS (manufactured by JSR Corporation, trade name: "DYNARON 8600P") was used as an intermediate layer formation material instead of the first pressure-sensitive adhesive layer formation material.
Table 3 shows the results of the evaluations of the pressure-sensitive adhesive sheet (C10).

**[Table 3]**

| | | Pressure-sensitive adhesive sheet | | | | | Pressure-sensitive adhesive sheet | |
|---|---|---|---|---|---|---|---|---|
| | | (9) | (10) | (11) | (12) | | (C9) | (C10) |
| Backing layer (A) | Material name | LDPE | LDPE | LDPE | LDPE | Backing layer (A) | LDPE | LDPE |
| | Thickness [µm] | 50 | 50 | 50 | 50 | | 50 | 50 |
| First pressure-sensitive adhesive layer (B1) | Material name | SEBS(17) | SEBS(27) | SEBS | SEBS(27) | First pressure-sensitive adhesive layer (B1) | LDPE | SEBS |
| | Thickness [µm] | 10 | 10 | 10 | 10 | | 10 | 10 |
| Second pressure-sensitive adhesive layer (B2) | Material name | Ac3 | Ac3 | Ac3(27) | Ac3(27) | Second pressure-sensitive adhesive layer (B2) | Ac3 | Ac3 |
| | Thickness [µm] | 10 | 10 | 10 | 10 | | 10 | 10 |
| Peel strength | [N/20 mml | 6.3 | 7.2 | 9.1 | 8.6 | Peel strength | 0.2 | 1.6 |
| | Peeling interface | B2/No.31 B | B2/No.31 D | B2/No.31B | B2/No.31B | | B1/B2 | B1/B2 |
| Adhesion | [N/20 mm] | 2.2 | 2.7 | 3.2 | 3.4 | Adhesion | An adhesive residue occurs on the adhered. | An adhesive residue occurs on the adhered. |

As shown in Examples 9 to 12 of Table 3, it can be confirmed that the pressure-sensitive adhesive sheet of the present invention can express good interlayer adhesiveness and can express good adhesion.

### Industrial Applicability

The pressure-sensitive adhesive sheet obtained in the present invention is preferably used in an optical member requiring visibility. In addition, the sheet is suitable for an application where an optical component such as a polarizing plate for a liquid crystal display panel, a wavelength plate, a retardation plate, an optical compensation film, a brightness enhancement film, a light diffusion sheet, or a reflective sheet is attached. In particular, the pressure-sensitive adhesive sheet obtained in the present invention is suitable for an application where an optical component is attached with an acrylic resin because the sheet preferably shows high adhesion for an acrylic adherend by virtue of an electrostatic action. In addition, the pressure-sensitive adhesive sheet obtained in the present invention is suitable for a surface protection application where a light peel strength is required because the sheet preferably shows low adhesion for a nonpolar resin such as an olefin.

### Reference Signs List

- **100**: pressure-sensitive adhesive sheet
- **1**: backing layer
- **21**: first pressure-sensitive adhesive layer
- **22**: second pressure-sensitive adhesive layer

## Claims

1. A pressure-sensitive adhesive sheet formed of at least three layers, comprising a backing layer (A), a first pressure-sensitive adhesive layer (B1), and a second pressure-sensitive adhesive layer (B2) in the stated order, wherein:
the backing layer (A) contains a thermoplastic resin;
the first pressure-sensitive adhesive layer (B1) contains at least one kind selected from an α-olefin-based thermoplastic elastomer and a styrene-based thermoplastic elastomer; and
the second pressure-sensitive adhesive layer (B2) contains an acrylic block copolymer containing an acrylic acid ester block structure and a methacrylic acid ester block structure.

2. A pressure-sensitive adhesive sheet according to claim 1, wherein the backing layer (A) contains a polyolefin-based resin.

3. A pressure-sensitive adhesive sheet according to claim 1, wherein the acrylic block copolymer has a weight-average molecular weight of 30,000 to 300,000.

4. A pressure-sensitive adhesive sheet according to claim 1, wherein:
the pressure-sensitive adhesive sheet is a laminate including a laminated structure "backing layer (A) /first pressure-sensitive adhesive layer (B1)/second pressure-sensitive adhesive layer (B2);" and
the pressure-sensitive adhesive sheet is obtained by integrating formation materials for the laminate including a formationmaterial (a) forthebackinglayer (A), aformationmaterial (b1) for the first pressure-sensitive adhesive layer (B1), and a formation material (b2) for the second pressure-sensitive adhesive layer (B2) through co-extrusion molding.

5. A pressure-sensitive adhesive sheet formed of at least three layers, comprising a backing layer (A), a first pressure-sensitive adhesive layer (B1), and a second pressure-sensitive adhesive layer (B2) in the stated order, wherein:
a peel strength upon peeling of the first pressure-sensitive adhesive layer (B1) from the backing layer (A) under conditions of a measurement temperature of 23°C, a tension speed of 0.3 m/min, and a peel angle of 180° is 2.0 N/20 mm or more; and
a peel strength upon peeling of the second pressure-sensitive adhesive layer (B2) from the first pressure-sensitive adhesive layer (B1) under conditions of a measurement temperature of 23°C, a tension speed of 0.3 m/min, and a peel angle of 180° is 2.0 N/20 mm or more.

6. A pressure-sensitive adhesive sheet according to claim 5, wherein the backing layer (A) contains a thermoplastic resin.

7. A pressure-sensitive adhesive sheet according to claim 6, wherein the backing layer (A) contains a polyolefin-based resin.

8. A pressure-sensitive adhesive sheet according to claim 5, wherein the first pressure-sensitive adhesive layer (B1) contains at least one kind selected from an α-olefin-based thermoplastic elastomer and a styrene-based thermoplastic elastomer.

9. A pressure-sensitive adhesive sheet according to claim 5, wherein the second pressure-sensitive adhesive layer (B2) contains an acrylic block copolymer containing an acrylic acid ester block structure and a methacrylic acid ester block structure.

10. A pressure-sensitive adhesive sheet according to claim 9, wherein the acrylic block copolymer has a weight-average molecular weight of 30,000 to 300,000.

11. A pressure-sensitive adhesive sheet according to claim 5, wherein:
the pressure-sensitive adhesive sheet is a laminate including a laminated structure "backing layer (A)/first pressure-sensitive adhesive layer (B1)/second pressure-sensitive adhesive layer (B2);" and
the pressure-sensitive adhesive sheet is obtained by integrating formation materials for the laminate including a formationmaterial (a) for the backing layer (A), a formationmaterial (b1) for the first pressure-sensitive adhesive layer (B1), and a formation material (b2) for the second pressure-sensitive adhesive layer (B2) through co-extrusion molding.

12. A pressure-sensitive adhesive sheet formed of at least three layers, comprising a backing layer (A), a first pressure-sensitive adhesive layer (B1), and a second pressure-sensitive adhesive layer (B2) in the stated order, wherein at least one of the first pressure-sensitive adhesive layer (B1) and the second pressure-sensitive adhesive layer (B2) contains a tackifier.

13. A pressure-sensitive adhesive sheet according to claim 12, wherein when the first pressure-sensitive adhesive layer (B1) contains the tackifier, a content of the tackifier in the first pressure-sensitive adhesive layer (B1) is 5 wt% or more with respect to a resin component of the first pressure-sensitive adhesive layer (B1).

14. A pressure-sensitive adhesive sheet according to claim 12, wherein when the second pressure-sensitive adhesive layer (B2) contains the tackifier, a content of the tackifier in the second pressure-sensitive adhesive layer (B2) is 5 wt% or more with respect to a resin component of the second pressure-sensitive adhesive layer (B2).

15. A pressure-sensitive adhesive sheet according to claim 12, wherein the backing layer (A) contains a thermoplastic resin.

16. A pressure-sensitive adhesive sheet according to claim 15, wherein the backing layer (A) contains a polyolefin-based resin.

17. A pressure-sensitive adhesive sheet according to claim 12, wherein the first pressure-sensitive adhesive layer (B1) contains at least one kind selected from an α-olefin-based thermoplastic elastomer and a styrene-based thermoplastic elastomer.

18. A pressure-sensitive adhesive sheet according to claim 12, wherein the second pressure-sensitive adhesive layer (B2) contains an acrylic block copolymer containing an acrylic acid ester block structure and a methacrylic acid ester block structure.

19. A pressure-sensitive adhesive sheet according to claim 18, wherein the acrylic block copolymer has a weight-average molecular weight of 30,000 to 300,000.

20. A pressure-sensitive adhesive sheet according to claim 12, wherein:
the pressure-sensitive adhesive sheet is a laminate including a laminated structure "backing layer (A) /first pressure-sensitive adhesive layer (B1)/second pressure-sensitive adhesive layer (B2);" and
the pressure-sensitive adhesive sheet is obtained by integrating formation materials for the laminate including a formationmaterial (a) for the backing layer (A), a formationmaterial (b1) for the first pressure-sensitive adhesive layer (B1), and a formation material (b2) for the second pressure-sensitive adhesive layer (B2) through co-extrusion molding.
